# EUROPEAN PATENT APPLICATION

(11) **EP 4 422 247 A1**
(43) Date of publication of application: **28.08.2024**
(21) Application number: 21961402.1
(22) Date of filing: 21.10.2021
(51) Int. Cl.: H04W 16/32, H04W 72/04, H04W 76/15, H04W 52/02

(54) **TERMINAL, BASE STATION, WIRELESS COMMUNICATION SYSTEM, AND WIRELESS COMMUNICATION METHOD**

(71) Applicant: NTT DOCOMO, INC., Chiyoda-ku Tokyo 100-6150 (JP)
(72) Inventor: OOKAWA, Riki, Tokyo 100-6150 (JP); HANAKI, Akihito, Tokyo 100-6150 (JP)
(74) Representative: Hoffmann Eitle
(86) International application number: PCT/JP2021/038894
(87) International publication number: WO 2023/067750

(57) **Abstract**

A terminal includes: a control unit that controls activation of a secondary cell group including a specific secondary cell for which a physical uplink control channel is configured and a secondary cell other than the specific secondary cell; and a communication unit that performs communication with the secondary cell group, in which the control unit performs activation of the secondary cell, based on an information element related to the secondary cell, and an information element related to the secondary cell is an information element stored when the secondary cell group is deactivated, or an information element included in a message requesting activation of the secondary cell group.

## Description

### TECHNICAL FIELD

The present disclosure relates to a terminal that performs radio communication, in particular, a terminal, a base station, a radio communication system, and a radio communication method that perform activation of a secondary cell group.

### BACKGROUND ART

The 3rd Generation Partnership Project (3GPP) has prepared a specification for the 5th generation mobile communication system (which may be called 5G, New Radio (NR), or Next Generation (NG)), and is also in the process of specifying the next generation system called Beyond 5G, 5G Evolution, or 6G.

In LTE and NR, it is specified how an RRC (Radio Resource Control) message configures a secondary cell (SCell), and a MAC CE (Medium Access Control Control Element) message performs SCell activation (see Non-Patent Literature 1).

In addition, according to Release 17, the activation/deactivation of secondary cell groups (hereinafter, SCG) have been discussed.

### CITATION LIST

### NON-PATENT LITERATURE

Non-Patent Literature 1: 3GPP TS 38.321 V16.7.6 3rd Generation Partnership Project; Technical Specification Group Radio Access Network; NR; Medium Access Control (MAC) protocol specification (Release 16), 3GPP, September 2021

### SUMMARY OF THE INVENTION

Against the background described above, the inventors and the like, as a result of intensive studies, found that it is possible to reduce a signaling load for SCells other than a specific SCell (Secondary Cell) for which a physical uplink control channel (PUCCH) is configured.

Accordingly, the present invention has been made in view of such environments, and an object of the present invention is to provide a terminal, a base station, a radio communication system and a radio communication method capable of reducing a signaling load, in the activation of a secondary group.

An aspect of the disclosure is a terminal including: a control unit that controls activation of a secondary cell group including a specific secondary cell for which a physical uplink control channel is configured and a secondary cell other than the specific secondary cell; and a communication unit that performs communication with the secondary cell group, in which the control unit performs activation of the secondary cell, based on an information element related to the secondary cell, and an information element related to the secondary cell is an information element stored when the secondary cell group is deactivated, or an information element included in a message requesting activation of the secondary cell group.

An aspect of the disclosure is a base station including: a control unit that controls activation of a secondary cell group including a specific secondary cell for which a physical uplink control channel is configured and a secondary cell other than the specific secondary cell; and a communication unit that performs communication with a terminal, in which the control unit assumes that the terminal performs activation of the secondary cell, based on an information element related to the secondary cell, and an information element related to the secondary cell is an information element stored when the secondary cell group is deactivated, or an information element included in a message requesting activation of the secondary cell group.

An aspect of the disclosure is a radio communication system including a terminal and a base station, in which the terminal includes a control unit that controls activation of a secondary cell group including a specific secondary cell for which a physical uplink control channel is configured and a secondary cell other than the specific secondary cell, the control unit performs activation of the secondary cell, based on an information element related to the secondary cell, and an information element related to the secondary cell is an information element stored when the secondary cell group is deactivated, or an information element included in a message requesting activation of the secondary cell group.

An aspect of the disclosure is a radio communication method including: a step A of controlling activation of a secondary cell group including a specific secondary cell for which a physical uplink control channel is configured and a secondary cell other than the specific secondary cell; and a step B of communicating with the secondary cell group, in which the step A includes a step of performing activation of the secondary cell, based on an information element related to the secondary cell, and an information element related to the secondary cell is an information element stored when the secondary cell group is deactivated, or an information element included in a message requesting activation of the secondary cell group.

### BRIEF DESCRIPTION OF THE DRAWINGS

[FIG. 1] FIG. 1 is an overall schematic configuration diagram of a radio communication system 10.
[FIG. 2] FIG. 2 is a diagram illustrating a frequency range used in the radio communication system 10.
[FIG. 3] FIG. 3 is a diagram illustrating a configuration example of a radio frame, a subframe and a slot used in the radio communication system 10.
[FIG. 4] FIG. 4 is a functional block configuration diagram of the UE 200.
[FIG. 5] FIG. 5 is a functional block configuration diagram of the gNB 100.
[FIG. 6] FIG. 6 is a diagram for explaining an operation example.
[FIG. 7] FIG. 7 is a diagram for explaining an operation example.

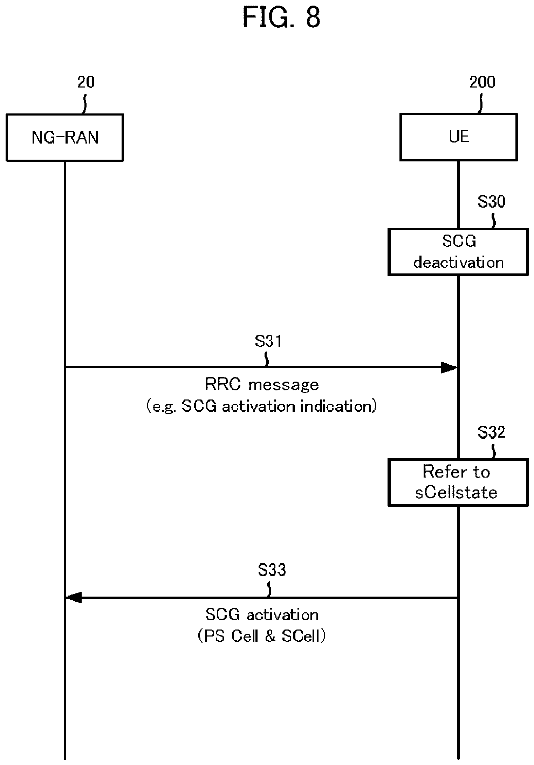

[FIG. 8] FIG. 8 is a diagram for explaining an operation example.
[FIG. 9] FIG. 9 is a diagram illustrating an example of a hardware configuration of the gNB 100 and the UE 200.
[FIG. 10] FIG. 10 is a diagram illustrating a configuration example of a vehicle 2001.

### DESCRIPTION OF EMBODIMENT

An embodiment will be described below with reference to the drawings. Note that the same or similar reference numerals have been attached to the same functions and configurations, and the descriptions thereof will be omitted as appropriate.

### [Embodiment]

### (1) Overall schematic configuration of radio communication system

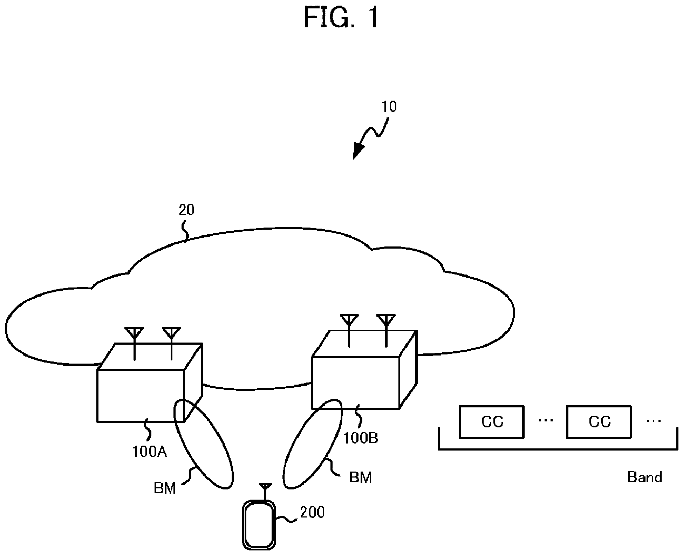

FIG. 1 is an overall schematic diagram of a radio communication system 10 according to an embodiment. The radio communication system 10 is a radio communication system according to 5G New Radio (NR), and includes a Next Generation-Radio Access Network 20 (hereinafter referred to as NG-RAN 20) and a terminal 200 (hereinafter referred to as UE (User Equipment) 200).

The radio communication system 10 may be a radio communication system according to a system called Beyond 5G, 5G Evolution, or 6G.

The NG-RAN 20 includes a radio base station 100A (hereinafter referred to as gNB 100A) and a radio base station 100B (hereinafter referred to as gNB 100B). The specific configuration of the radio communication system 10 including the number of gNBs and UEs is not limited to the example illustrated in FIG. 1.

The NG-RAN 20 actually includes a plurality of NG-RAN Nodes, specifically, gNBs (or ng-eNBs), and is connected to a 5G-compliant core network (5GC, not illustrated). The NG-RAN 20 and 5GC may simply be expressed as a "network".

The gNB 100A and the gNB 100B are radio base stations according to 5G, and perform radio communication according to 5G with the UE 200. The gNB 100A and the gNB 100B, and the UE 200 can support Massive MIMO (Multiple-Input Multiple-Output) that generates beams BM with higher directivity, carrier aggregation (CA) that bundles and uses a plurality of component carriers (CCs), dual connectivity (DC) that simultaneously performs communication between the UE and each of the two NG-RAN nodes, and the like, by controlling radio signals transmitted from a plurality of antenna elements. The DC may include MR-DC (Multi-RAT Dual Connectivity) using MCG (Master Cell Group) and SCG (Secondary Cell Group) . Cells belonging to the MCG may be referred to as PCell (Primary Cell), and cells belonging to the SCG (Secondary Cell Group) may be referred to as SCell (Secondary Cell). Examples of MR-DC include EN-DC (E-UTRA-NR Dual Connectivity), NE-DC (NR-EUTRA Dual Connectivity), and NR-DC (NR-NR Dual Connectivity). Here, CC (cell) used in CA may be considered to constitute the same cell group. MCG and SCG may be considered to constitute the same cell group.

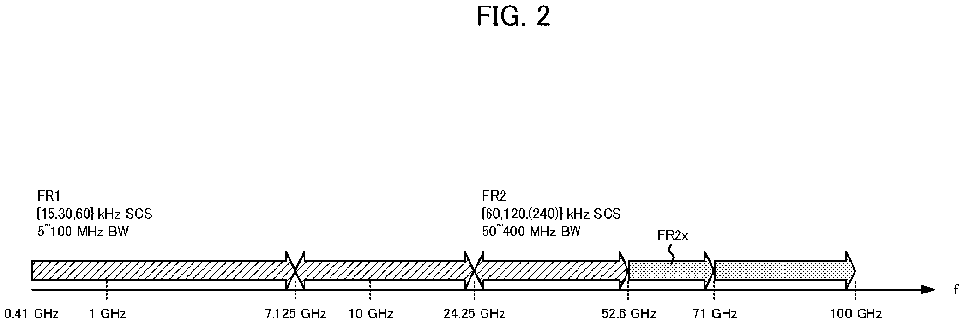

The radio communication system 10 supports a plurality of frequency ranges (FR). FIG. 2 illustrates a frequency range used in the radio communication system 10.

As illustrated in FIG. 2, the radio communication system 10 supports FR1 and FR2. The frequency bands of each FR are as follows:
- FR1: 410 MHz to 7.125 GHz
- FR2: 24.25 GHz to 52.6 GHz

In FR1, Sub-Carrier Spacing (SCS) of 15, 30 or 60 kHz may be used, and a bandwidth (BW) of 5 to 100 MHz may be used. FR2 is a higher frequency than FR1, and SCS of 60 or 120 kHz (240 kHz may be included) may be used, and a bandwidth (BW) of 50 to 400 MHz may be used.

The SCS may be interpreted as numerology. Numerology is defined in 3GPP TS 38.300, and corresponds to one sub-carrier interval in the frequency domain.

Further, the radio communication system 10 also supports higher frequency bands than the FR2 frequency band. Specifically, the radio communication system 10 supports the frequency band above 52.6 GHz up to 71 GHz or 114.25 GHz. Such a high frequency band may be referred to as "FR2x" for the sake of convenience.

In order to solve the problem that the influence of phase noise becomes large in the high frequency band, cyclic prefix-orthogonal frequency division multiplexing (CP-OFDM)/discrete Fourier transform-spread (DFT-S-OFDM) with larger sub-carrier spacing (SCS) may be applied when using the band above 52.6 GHz.

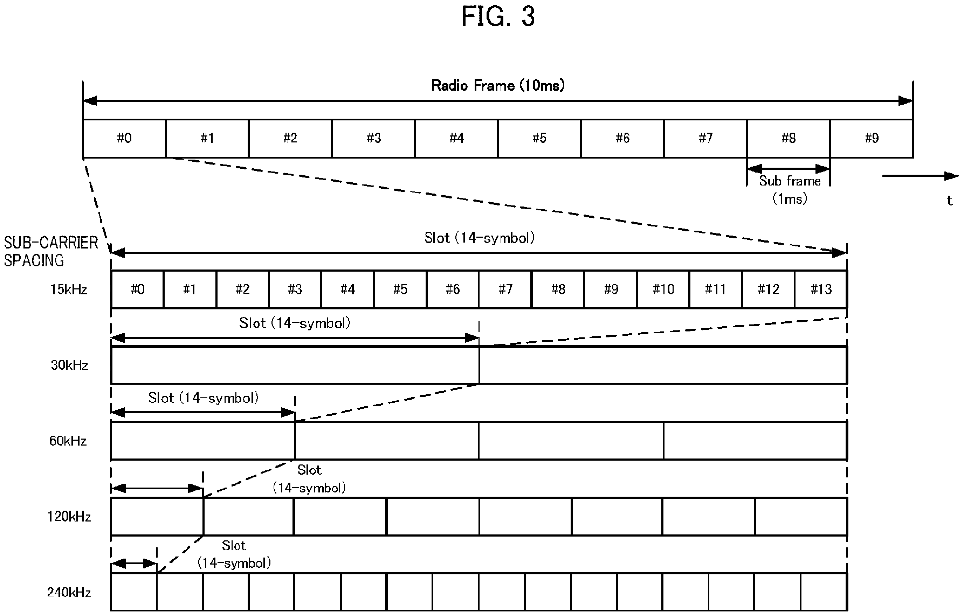

FIG. 3 illustrates a configuration example of a radio frame, a subframe and a slot used in radio communication system 10.

As illustrated in FIG. 3, one slot is composed of 14 symbols, and the symbol period (and the slot period) becomes shorter as the SCS becomes larger (wider). The SCS is not limited to the spacing (frequency) illustrated in FIG. 3. For example, 480 kHz, 960 kHz, or the like may be used.

The number of symbols constituting one slot does not necessarily have to be 14 symbols (for example, 28, 56 symbols). Further, the number of slots per subframe may vary depending on the SCS.

The time direction (t) illustrated in FIG. 3 may be referred to as a time domain, a symbol period, a symbol time, or the like. The frequency direction may be referred to as a frequency domain, a resource block, a subcarrier, a bandwidth part (BWP), or the like.

A DMRS is a type of reference signals, and is prepared for each type of channels. Unless otherwise specified, the DMRS may mean a DMRS for a downlink data channel, specifically, a PDSCH (Physical Downlink Shared Channel). However, a DMRS for an uplink data channel, specifically, a PUSCH (Physical Uplink Shared Channel), may be interpreted in the same way as the DMRS for the PDSCH.

The DMRS can be used for channel estimation in the UE 200 as part of a device, for example, coherent demodulation. The DMRS may be present only in a resource block (RB) used for PDSCH transmission.

The DMRS may have a plurality of mapping types. Specifically, the DMRS have a mapping type A and a mapping type B. An initial DMRS of the mapping type A is arranged in a second or third symbol in the slot. The DMRS of the mapping type A may be mapped based on a slot boundary regardless of where actual data transmission starts in the slot. It may be interpreted that the initial DMRS is arranged in the second or third symbol in the slot because the initial DMRS is arranged after control resource sets (CORESET).

The initial DMRS of the mapping type B may be arranged in an initial symbol for data allocation. In other words, the position of the DMRS may be provided relatively to where the data is arranged, not to the slot boundary.

Further, the DMRS may have a plurality of types. Specifically, the DMRS have a Type 1 and a Type 2. The Type 1 and the Type 2 are different in terms of mapping in the frequency domain and the maximum number of orthogonal reference signals. The Type 1 allows a maximum of four orthogonal signals to be output with a single-symbol DMRS, whereas the Type 2 allows a maximum of eight orthogonal signals to be output with a double-symbol DMRS.

### (2) Functional block configuration of radio communication system

Next, a functional block configuration of the radio communication system 10 will be described.

First, a functional block configuration of the UE 200 will be described.

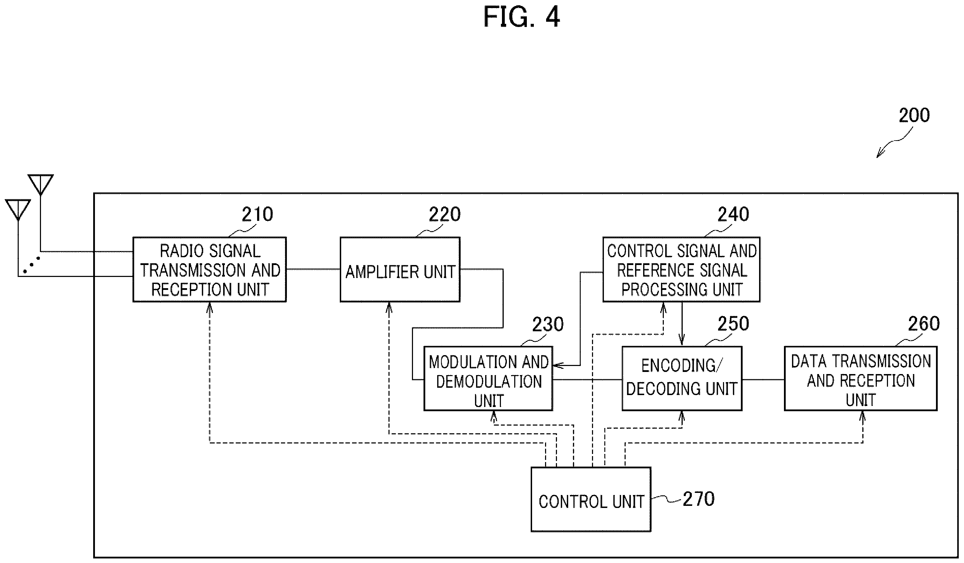

FIG. 4 is a functional block configuration diagram of the UE 200. As illustrated in FIG. 4, the UE 200 includes a radio signal transmission and reception unit 210, an amplifier unit 220, a modulation and demodulation unit 230, a control signal/reference signal processing unit 240, an encoding/decoding unit 250, a data transmission and reception unit 260, and a control unit 270.

The radio signal transmission and reception unit 210 transmits and receives a radio signal according to NR. The radio signal transmission and reception unit 210 supports Massive MIMO, CA bundling and using a plurality of CCs, DC for performing simultaneous communication between the UE and each of the two NG-RAN Nodes, and the like.

In the embodiment, the radio signal transmission and reception unit 210 constitutes a communication unit that performs communication with the SCG (the cells included therein).

The amplifier unit 220 includes a power amplifier (PA) /low noise amplifier (LNA) or the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation/demodulation, transmitted power setting, resource block allocation, or the like for each predetermined communication destination (gNB 100 or another gNB). In the modulation and demodulation unit 230, cyclic prefix-orthogonal frequency division multiplexing (CP-OFDM)/discrete Fourier transform-spread (DFT-S-OFDM) may be applied. The DFT-S-OFDM may be applied to downlink (DL) as well as uplink (UL).

The control signal and reference signal processing unit 240 performs processing related to various types of control signals transmitted and received by the UE 200, and processing related to various types of reference signals transmitted and received by the UE 200.

Specifically, the control signal and reference signal processing unit 240 receives various types of control signals transmitted from the gNB 100 via a predetermined control channel, such as a control signal in a radio resource control layer (RRC). The control signal and reference signal processing unit 240 further transmits various types of control signals to the gNB 100 via the predetermined control channel.

The control signal and reference signal processing unit 240 performs processing using a reference signal (RS) such as a demodulation reference signal (DMRS) or a phase tracking reference signal (PTRS).

The DMRS is a terminal-specific reference signal (pilot signal) known between a base station and a terminal for estimating a fading channel used for data demodulation. The PTRS is a terminal-specific reference signal for a purpose of estimating phase noise, which becomes a problem in a high frequency band.

Examples of the reference signals may include, in addition to the DMRS and the PTRS, a channel state information-reference signal (CSI-RS), a sounding reference signal (SRS), and a positioning reference signal (PRS) for positional information.

The channels include a control channel and a data channel. Examples of the control channel include a PDCCH (Physical Downlink Control Channel), a PUCCH (Physical Uplink Control Channel), a RACH (Random Access Channel), downlink control information (DCI) including a random access radio network temporary identifier (RA-RNTI), and a physical broadcast channel (PBCH).

Examples of the data channel include the PDSCH (Physical Downlink Shared Channel), and the PUSCH (Physical Uplink Shared Channel). Data means data transmitted via the data channel. A data channel may be read as a shared channel.

Here, the control signal and reference signal processing unit 240 may receive downlink control information (DCI). DCI includes fields that store existing fields such as DCI Formats, Carrier Indicator (CI), BWP Indicator, FDRA (Frequency Domain Resource Assignment), TDRA (Time Domain Resource Assignment), MCS (Modulation and Coding Scheme), HPN (HARQ Process Number), NDI (New Data Indicator), and RV (Redundancy Version).

The value stored in the DCI Format field is an information element that specifies the format of the DCI. The value stored in the CI field is an information element that specifies the CC to which the DCI is applied. The value stored in the BWP indicator field is an information element that specifies the BWP to which the DCI is applied. The BWP that can be specified by the BWP indicator is configured by the information element (BandwidthPart-Config) included in the RRC message. The value stored in the FDRA field is an information element that specifies the frequency domain resource to which the DCI is applied. The frequency domain resource is specified by a value stored in the FDRA field and an information element (RA Type) included in the RRC message. The value stored in the TDRA field is an information element that specifies the time domain resource to which the DCI is applied. The time domain resource is specified by a value stored in the TDRA field and an information element (pdsch-TimeDomainAllocationList, pusch-TimeDomainAllocationList) included in the RRC message. The time domain resource may be specified by a value stored in the TDRA field and by a default table. The value stored in the MCS field is an information element that specifies the MCS to which the DCI is applied. The MCS is specified by a value stored in the MCS and by the MCS table. The MCS table may be specified by an RRC message, or specified by RNTI scrambling. The value stored in the HPN field is an information element that specifies the HARQ Process to which the DCI is applied. The value stored in the NDI is an information element for specifying whether or not the data to which the DCI is applied is the first transmission data. The value stored in the RV field is an information element that specifies the redundancy of the data to which the DCI is applied.

The encoding/decoding unit 250 performs data division/connection, channel coding/decoding, and the like for each predetermined communication destination (gNB 100 or another gNB).

Specifically, the encoding/decoding unit 250 divides the data output from the data transmission and reception unit 260 into predetermined sizes, and performs channel coding on the divided data. The encoding/decoding unit 250 also decodes the data output from the modulation and demodulation unit 230, and connects the decoded data.

The data transmission and reception unit 260 performs transmission and reception of protocol data units (PDU) and service data units (SDU). Specifically, the data transmission and reception unit 260 performs assembly/disassembly of PDUs/SDUs in a plurality of layers (medium access control layer (MAC), radio link control layer (RLC), packet data convergence protocol layer (PDCP), and the like). The data transmission and reception unit 260 also performs error correction and retransmission control of the data, based on the hybrid automatic repeat request (HARQ).

The control unit 270 controls each function block constituting the UE 200. In the embodiment, the control unit 270 constitutes a control unit for controlling the activation of the SCG. The control unit 270 may control the deactivation of the SCG. The SCG may include a specific secondary cell for which a physical uplink control channel (PUCCH) is configured, and a secondary cell other than the specific secondary cell. The specific secondary cell may be referred to as a PUCCH SCell, or a PSCell (Primary Secondary Cell). Hereinafter, the specific secondary cell is referred to as a PSCell. A secondary cell other than the specific secondary cell may be referred to simply as an SCell. The activation of the SCG may be referred to as SCG activation. The deactivation of the SCG may be referred to as SCG deactivation.

The control unit 270 may perform SCell activation based on an information element related to the SCell. The SCell activation may be performed without using a MAC CE message. The information element related to the SCell may be considered as an information element for the SCell activation. The information element related to the SCell may be referred to as sCellState.

First, the information element related to the SCell may be an information element stored when the SCG is deactivated. That is, the information element related to the SCell is an information element referred to in the activation of the SCell with which the UE 200 was communicating before the UE 200 deactivates the SCG.

Second, the information element related to the SCell may be an information element included in a message requesting the SCG activation. The message may be an RRC message. The RRC message may be referred to as an SCG activation indication. In such a case, the information element related to the SCell is not limited to the SCell with which the UE 200 was communicating before the UE 200 deactivates the SCG, and is an information element referred to in the activation of the SCell selected on the NW side.

The information element related to the SCell may be sCellState-r16 defined in 3GPP TS 38.331. In such a case, the SCG activation may be added as a condition for configuring "activated" in sCellState-r16. That is, the information element related to the SCell may be considered to be an extension of sCellState-r16.

Alternatively, the information element related to the SCell may be a newly defined information element. That is, the information element related to the SCell may be considered as an information element for activating the SCell without using the MAC CE message in the SCG activation.

The information element related to the SCell may be included in an information element related to configuration of the SCell (for example, SCellConfig). The SCellConfig may include at least an information element identifying an SCell (for example, sCellIndex). The SCellConfig may be included in an information element related to MSG or SCG configuration (for example, CellGroupConfig).

Second, a functional block configuration of the gNB 100 will be described.

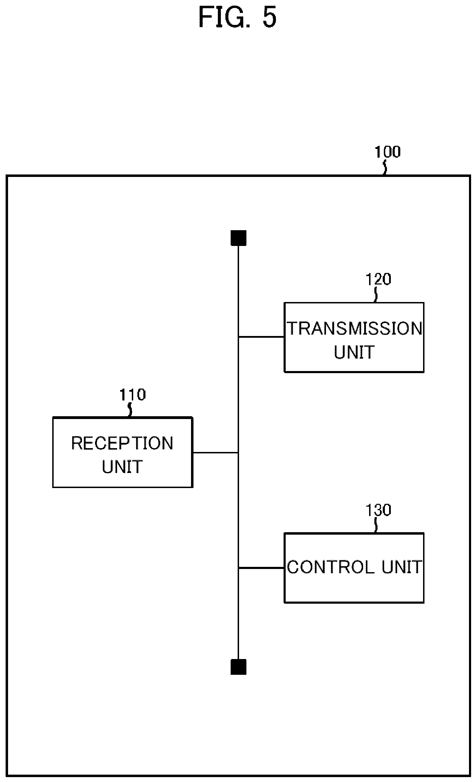

FIG. 5 is a functional block configuration diagram of the gNB 100. As illustrated in FIG. 5, the gNB 100 includes a reception unit 110, a transmission unit 120, and a control unit 130.

The reception unit 110 receives various signals from the UE 200. The reception unit 110 may receive UL signals via a PUCCH or a PUSCH. In the embodiment, the reception unit 110 may receive a message requesting the SCG activation from the UE 200.

The transmission unit 120 transmits various signals to the UE 200. The transmission unit 120 may transmit DL signals via a PDCCH or a PDSCH. In the embodiment, the transmission unit 120 may transmit a message requesting the SCG activation to the UE 200.

In the embodiment, at least one of the reception unit 110 and the transmission unit 120 constitutes a communication unit that performs communication with the UE 200.

The control unit 130 controls the gNB 100. In the embodiment, the control unit 130 constitutes a control unit that controls the activation of the SCG. The control unit 130 may control the deactivation of the SCG. The control unit 130 may assume that the UE 200 performs the SCell activation, based on an information element related to the SCell.

### (3) Problem

Next, a problem in the introduction of SCG activation/deactivation will be described. A state in which the SGC is deactivated (SCG deactivated state) has been studied to reduce the power consumption of the UE 200 and NW. For example, the UE 200 does not perform operations such as PUSCH transmission, SRS transmission, and PDCCH monitoring in the SCG deactivated state.

In this case, when assuming the SCG activation, the SCG activation can be divided into PSCell activation and SCell activation.

The PSCell activation may be performed by an NW trigger, or by a UE 200 trigger. When the PSCell activation is performed by the NW trigger, the NW (for example, MN; Master Node) transmits to the UE a message (for example, SCG activation indication) requesting the activation of the SCG. When the PSCell activation is performed by the UE 200 trigger, the UE 200 may transmit to the NW (for example, MN) a message requesting the activation of the SCG, or the UE 200 may make a connection (for example, transmitting a PRACH) to the NW (for example, SN; secondary node) without transmitting to the NW a message requesting the activation of the SCG.

In contrast, the SCell activation is assumed to be performed by transmitting a MAC CE message from the NW (for example, PSCell) to the UE 200 after the PSCell activation.

The inventors and the like, as a result of intensive studies, found that it is possible to reduce the signaling load associated with the SCell activation by omitting the transmission of the MAC CE message that is assumed in the SCell activation.

### (4) Operation example

Next, an operation example for the above-described problem will be described. According to the combination of the information element referred to in the SCell activation and the trigger of the SCG activation, the following options can be considered as an operation example.

### (4.1) Option 1

In Option 1, a case will be described in which as an information element related to the SCell, an information element stored when the SCG is deactivated is used, and the SCG activation is performed by an NW trigger.

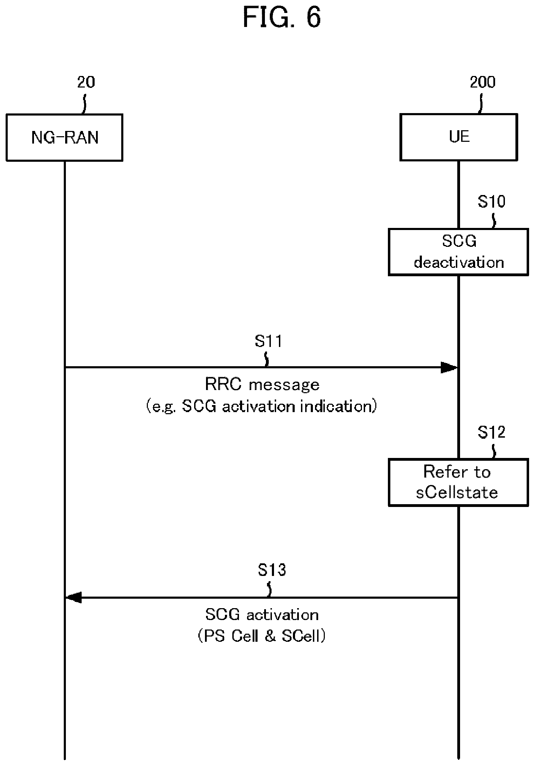

As illustrated in FIG. 6, in step S10, the UE 200 performs the SCG deactivation. Here, the UE 200 has received an information element related to SCell and has stored the information element related to the SCell before the SCG deactivation. The information element related to the SCell may be (an extension of) sCellState-r16, or may be a newly defined information element.

In step S11, the NG-RAN 20 transmits to the UE 200 a message requesting the activation of the SCG. The entity that transmits the message may be an MCG (MN). The message may be an RRC message. The RRC message may be referred to as an SCG activation indication. The RRC message may be RRCReconfiguration.

In step S12, the UE 200 refers to the information element related to the SCell. The information element related to the SCell is the information element stored when the SCG is deactivated.

In step S13, the UE 200 performs the SCG activation. Specifically, the UE 200 performs the PSCell activation and SCell activation. The SCell activation may be performed simultaneously with the PSCell activation, or may be performed after the PSCell activation. It should be noted that in the SCell activation, the transmission of the MAC CE message is unnecessary from the PSCell to the UE 200.

### (4.2) Option 2

In Option 2, a case will be described in which as an information element related to the SCell, an information element stored when the SCG is deactivated is used, and the SCG activation is performed by an UE 200 trigger.

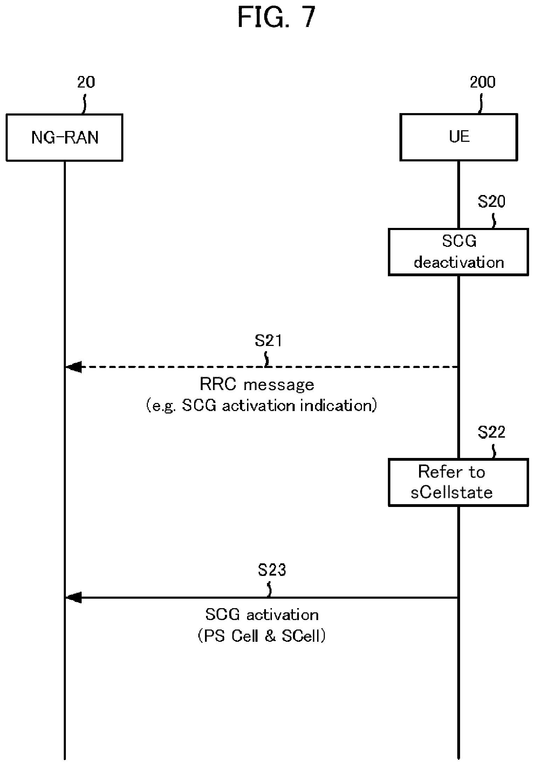

As illustrated in FIG. 7, in step S20, the UE 200 performs the SCG deactivation. Here, the UE 200 has received an information element related to the SCell and has stored the information element related to the SCell before the SCG deactivation. The information element related to the SCell may be (an extension of) sCellState-r16, or may be a newly defined information element.

In step S21, the UE 200 transmits to the NG-RAN 20 a message requesting the SCG activation. The destination of the message may be an MCG (MN). The message may be an RRC message. The RRC message may be referred to as an SCG activation indication. The RRC message may be UEAssistanceInformation, or may be a newly defined message.

However, if the connection to the SCG (PSCell and SCell) is permitted without transmitting a message requesting the activation of the SCG, the processing in step S21 may be omitted.

In step S22, the UE 200 refers to the information element related to the SCell. The information element related to the SCell is the information element stored when the SCG is deactivated.

In step S23, the UE 200 performs the SCG activation. Specifically, the UE 200 performs the PSCell activation and SCell activation. The SCell activation may be performed simultaneously with the PSCell activation, or may be performed after the PSCell activation. It should be noted that in the SCell activation, the transmission of the MAC CE message from the PSCell to the UE 200 is unnecessary.

### (4.3) Option 3

In Option 3, a case will be described in which an information element included in a message requesting the activation of the SCG is used as an information element related to the SCell, and the SCG activation is performed by an NW trigger.

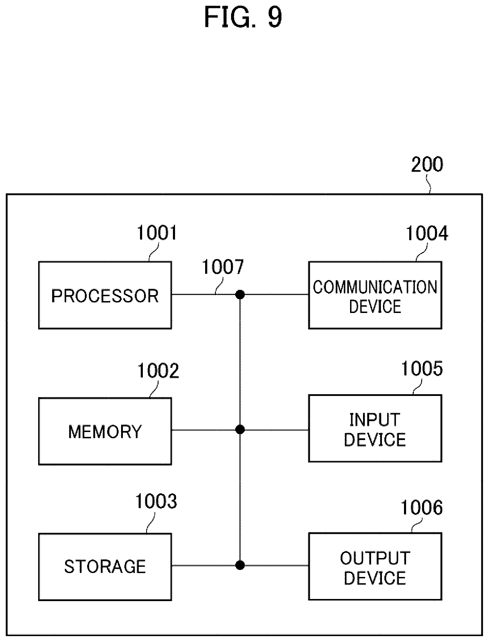

As illustrated in FIG. 9, in step S30, the UE 200 performs the SCG deactivation. Here, the UE 200 has received an information element related to the SCell and has stored the information element related to the SCell before the SCG deactivation. The information element related to the SCell may be (an extension of) sCellState-r16, or may be a newly defined information element.

In step S31, the NG-RAN 20 transmits to the UE 200 a message requesting the activation of the SCG. The entity that transmits the message may be an MCG (MN). The message may be an RRC message. The RRC message may be referred to as an SCG activation indication. The RRC message may be RRCReconfiguration.

In Option 3, the message requesting the activation of the SCG includes the information element related to the SCell. The information element related to the SCell may be (an extension of) sCellState-r16, or may be a newly defined information element.

In step S32, the UE 200 refers to the information element related to the SCell. The information element related to the SCell is the information element included in the message received in step S31.

In step S33, the UE 200 performs the SCG activation. Specifically, the UE 200 performs the PSCell activation and SCell activation. The SCell activation may be performed simultaneously with the PSCell activation, or may be performed after the PSCell activation. It should be noted that in the SCell activation, the transmission of the MAC CE message from the PSCell to the UE 200 is unnecessary.

In the above-described operation example, the UE 200 performs the SCell activation based on the information element related to the SCell included in the message received in step S31. However, the above-described operation example is not limited thereto. For example, the UE 200 may perform the SCell activation based on the information element stored when the SCG is deactivated, as in option 1, in a case where the message received in step S31 does not include an information element related to the SCell. In such a case, the information element stored when the SCG is deactivated is retained in the UE 200. In a case where the message received in step S31 includes an information element related to the SCell, it may be assumed that the information element included in the message requesting the activation of the SCG is used to update the information element stored when the SCG is deactivated.

### (5) Action and Effect

In the embodiment, the UE 200 performs the SCell activation based on the information element related to the SCell. This configuration makes it possible to omit a transmission of the MAC CE from the PSCell to the UE 200, thereby making it possible to reduce the signaling load associated with the SCell activation.

### (6) Other Embodiments

The contents of the present invention have been described in accordance with the embodiments as above; however, the present invention is not limited to these descriptions, and it will be obvious to those skilled in the art that various modifications and improvements thereof are possible.

In the above-described disclosure, in SCG activation, a PSCell is activated by an RRC message requesting the activation of the SCG (Direct SCell activation). However, the above-described disclosure is not limited thereto. In SCG activation, a PSCell may be activated by an MAC CE message requesting the PSCell activation (Normal SCell activation). Even in such a case, an SCell may be activated without using an MAC CE message. The information element related to the SCell may be included in the RRC message requesting the activation of the SCG, or may be included in the MAC CE message requesting the activation of the PS Cell.

The block diagram (Figs. 4 and 5) used in the description of the above-described embodiment shows blocks in units of functions. Those functional blocks (components) can be realized by a desired combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work is called a transmitting unit or a transmitter. For any of the above, as described above, the realization method is not particularly limited.

Further, the above-described gNB 100 and UE 200 (the device) may function as a computer that performs processing of a radio communication method of the present disclosure. Fig. 9 is a diagram showing an example of a hardware configuration of the device. As shown in Fig. 9, the device may be configured as a computer device including a processor 1001, a memory 1002, a storage 1003, a communication device 1004, an input device 1005, an output device 1006, a bus 1007, and the like.

Furthermore, in the following description, the term "device" can be substituted with circuit, device, unit, or the like. The hardware configuration of the device may include one or more devices shown in the figure or may not include some of the devices.

Each of the functional blocks of the device (see FIG. 4) is implemented by means of any of hardware elements of the computer device or a combination of the hardware elements.

In addition, each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above can be executed by one processor 1001 or can be executed simultaneously or sequentially by two or more processors 1001. The processor 1001 can be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 can be referred to as an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure can be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present invention may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or a desired combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be substituted with a mobile station (user terminal, hereinafter the same). For example, each aspect/embodiment of the present disclosure may be applied to a configuration in which communication between a base station and a mobile station is replaced with communication between a plurality of mobile stations (for example, this may be called Device-to-Device (D2D), Vehicle-to-Everything (V2X), or the like). In this case, the mobile station may have the function of a base station. In addition, words such as "uplink" and "downlink" may also be substituted with words corresponding to inter-terminal communication (for example, "side"). For example, an uplink channel, a downlink channel, or the like may be substituted with a side channel.

Similarly, the mobile station in the present disclosure may be read as a base station. In this case, the base station may have the function of the mobile station.

A radio frame may be composed of one or more frames in the time domain. Each of the one or more frames in the time domain may be referred to as a subframe.

A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as a TTI having a time length exceeding 1 ms, and a short TTI (for example, shortened TTI) may be read as a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a sub-carrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be set in one carrier for the UE.

At least one of the configured BWPs may be active, and the UE does not have to expect to transmit and receive predetermined signals/channels outside the active BWP. Note that "cell", "carrier", and the like in this disclosure may be read as "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be substituted with "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

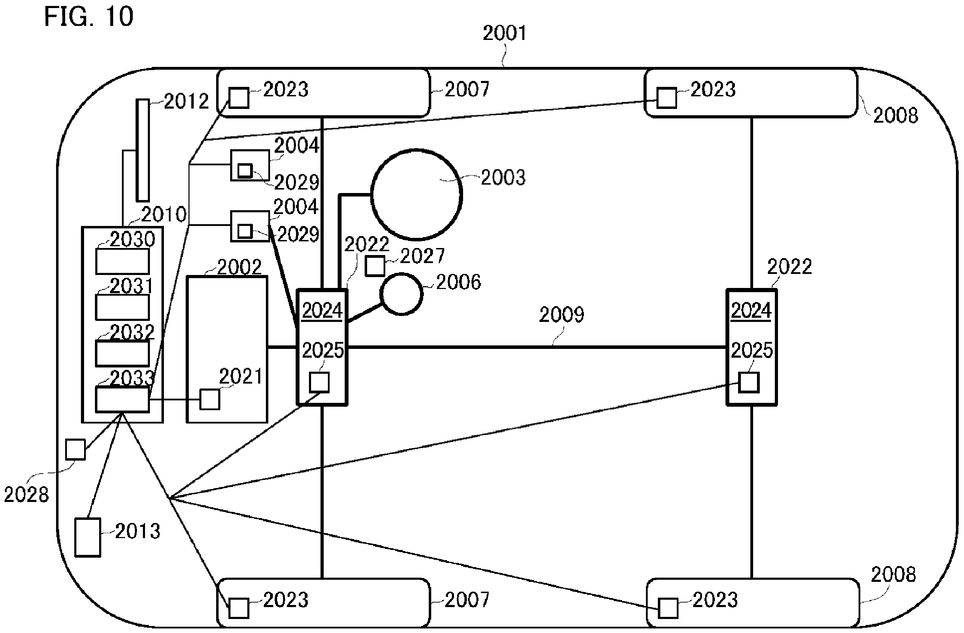

FIG. 10 illustrates a configuration example of a vehicle 2001. As illustrated in FIG. 10, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 includes, for example, an engine, a motor, and a hybrid of an engine and a motor.

The steering unit 2003 includes at least a steering wheel (which may be called handle), and is configured to steer at least one of front wheels and rear wheels, based on the operation of the steering wheel operated by a user.

The electronic control unit 2010 includes a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be called an ECU (Electronic Control Unit).

The signals from the various sensors 2021 to 2028 include a current signal from a current sensor 2021 for sensing the current of a motor, a rotation speed signal of front wheels and rear wheels acquired by a rotation speed sensor 2022, a pressure signal of front wheels and rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, an operation signal of a shift lever acquired by a shift lever sensor 2027, and a detection signal, which is acquired by an object detection sensor 2028, for detecting obstacles, vehicles, pedestrians, and the like.

The information service unit 2012 includes: various devices such as a car navigation system, an audio system, a speaker, a television, and a radio for providing various information such as driving information, traffic information, and entertainment information; and one or more ECUs for controlling these devices. The information service unit 2012 provides various multimedia information and multimedia services to the occupants of the vehicle 1 by using information acquired from an external device via a communication module 2013 or the like.

A driving support system unit 2030 includes various devices for providing functions to prevent accidents or reduce the driver's driving load, such as a millimeter wave radar, light detection and ranging (LiDAR), a camera, a positioning locator (for example, GNSS, or the like), map information (for example, high-definition (HD) maps, autonomous vehicle (AV) maps, or the like), a gyroscopic system (for example, inertial measurement unit (IMU), inertial navigation system (INS), or the like), an artificial intelligence (AI) chip, an AI processor, or the like; and one or more ECUs for controlling these devices. In addition, the driving support system unit 2030 transmits and receives various kinds of information via the communication module 2013 to realize a driving support function or an automatic driving function.

The communication module 2013 can communicate with the microprocessor 2031 and elements of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the right and left front wheels 2007, the right and left rear wheels 2008, the axle 2009, the microprocessor 2031 and the memory (ROM, RAM) 2032 in the electronic control unit 2010, and the sensors 2021 to 2028, all of which are provided in the vehicle 2001.

The communication module 2013 is a communication device that can be controlled by the microprocessor 2031 of the electronic control unit 2010, and can communicate with an external device. For example, the communication module 2013 transmits and receives various kinds of information to and from the external device by means of radio communication. The communication module 2013 may be provided inside or outside the electronic control unit 2010. The external device may be, for example, a base station, a mobile station, or the like.

The communication module 2013 transmits a current signal from a current sensor, which is input to the electronic control unit 2010, to an external device by means of radio communication. In addition, the communication module 2013 transmits to an external device by means of radio communication, a rotation speed signal of the front and rear wheels acquired by the rotation speed sensor 2022, an air pressure signal of the front and rear wheels acquired by the air pressure sensor 2023, a vehicle speed signal acquired by the vehicle speed sensor 2024, an acceleration signal acquired by the acceleration sensor 2025, an accelerator pedal depression amount signal acquired by the accelerator pedal sensor 2029, a brake pedal depression amount signal acquired by the brake pedal sensor 2026, a shift lever operation signal acquired by the shift lever sensor 2027, and a detection signal, which is acquired by the object detection sensor 2028, for detecting obstacles, vehicles, pedestrians, and the like. These signals are input to the electronic control unit 2010.

The communication module 2013 receives various pieces of information (traffic information, signal information, inter-vehicle information, and the like) transmitted from an external device, and displays them on the information service unit 2012 provided in the vehicle. The communication module 2013 also stores various pieces of information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like, all of which are provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 radio communication system
20 NG-RAN
100 gNB
110 reception unit
120 transmission unit
130 control unit
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication device
1005 input device
1006 output device
1007 bus
2001 vehicle
2002 drive unit
2003 steering unit
2004 accelerator pedal
2005 brake pedal
2006 shift lever
2007 left and right front wheels
2008 left and right rear wheels
2009 axle
2010 electronic control unit
2012 information service unit
2013 communication module
2021 current sensor
2022 rotation speed sensor
2023 air pressure sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port

## Claims

1. A terminal comprising:
a control unit that controls activation of a secondary cell group including a specific secondary cell for which a physical uplink control channel is configured and a secondary cell other than the specific secondary cell; and
a communication unit that performs communication with the secondary cell group, wherein
the control unit performs activation of the secondary cell, based on an information element related to the secondary cell, and
an information element related to the secondary cell is an information element stored when the secondary cell group is deactivated, or an information element included in a message requesting activation of the secondary cell group.

2. The terminal according to claim 1, wherein
the control unit performs activation of the secondary cell based on an information element stored when the secondary cell group is deactivated, in response to the message.

3. The terminal according to claim 1, wherein
the control unit autonomously performs activation of the secondary cell based on an information element stored when the secondary cell group is deactivated.

4. The terminal according to claim 1, wherein
the control unit performs activation of the secondary cell based on an information element included in the message, in response to the message.

5. A base station comprising:
a control unit that controls activation of a secondary cell group including a specific secondary cell for which a physical uplink control channel is configured and a secondary cell other than the specific secondary cell; and
a communication unit that performs communication with a terminal, wherein
the control unit assumes that the terminal performs activation of the secondary cell, based on an information element related to the secondary cell, and
an information element related to the secondary cell is an information element stored when the secondary cell group is deactivated, or an information element included in a message requesting activation of the secondary cell group.

6. A radio communication system including a terminal and a base station, wherein
the terminal includes a control unit that controls activation of a secondary cell group including a specific secondary cell for which a physical uplink control channel is configured and a secondary cell other than the specific secondary cell,
the control unit performs activation of the secondary cell, based on an information element related to the secondary cell, and
an information element related to the secondary cell is an information element stored when the secondary cell group is deactivated, or an information element included in a message requesting activation of the secondary cell group.

7. A radio communication method comprising:
a step A of controlling activation of a secondary cell group including a specific secondary cell for which a physical uplink control channel is configured and a secondary cell other than the specific secondary cell; and
a step B of communicating with the secondary cell group, wherein
the step A includes a step of performing activation of the secondary cell, based on an information element related to the secondary cell, and
an information element related to the secondary cell is an information element stored when the secondary cell group is deactivated, or an information element included in a message requesting activation of the secondary cell group.
